Europäisches Patentamt

(19) European Patent Office

Office européen des brevets

(11) Publication number: **0 145 030**
**A2**

(12) # EUROPEAN PATENT APPLICATION

(21) Application number: 84201087.8

(22) Date of filing: 25.03.82

(51) Int. Cl.⁴: **C 03 B 37/014**

(30) Priority: 30.03.81 US 248947
30.03.81 US 249022
13.04.81 US 253224

(43) Date of publication of application:
19.06.85 Bulletin 85/25

(84) Designated Contracting States:
AT BE CH DE FR GB IT LI NL SE

(60) Publication number of the earlier application
in accordance with Art. 76 EPC: 0 061 901

(71) Applicant: Corning Glass Works
Houghton Park
Corning New York 14831(US)

(72) Inventor: Blankenship, Michael Gregg
Morrcrest Drive R.D. No. 1
Corning New York(US)

(72) Inventor: Keck, Donald Bruce
Chequers Circle
Big Flats New York(US)

(72) Inventor: Sarkar, Arnab
273 Orchard Drive
Big Flats New York(US)

(74) Representative: Boon, Graham Anthony et al,
Elkington and Fife High Holborn House 52/54 High
Holborn
London, WC1V 6SH(GB)

(54) **Method of forming an optical waveguide fiber.**

(57) A method is disclosed comprising the steps of depositing on a rotating starting member (131 a first coating (130) of particulate glass, depositing on the outer surface of said first coating (130) another coating (134, 135, 136) of particulate glass, removing said starting member (131), and forming an optical waveguide fiber from the resultant soot preform. The step of depositing another coating comprises depositing a second coating (134) of particulate glass on the outer surface of said first coating (130), the refractive index of said second coating (134) being lower than that of said first coating (130), depositing on diametrically opposed portions of said second coating (134) first and second longitudinally extending regions (135) of glass soot having a thermal coefficient of expansion different from that of the said second coating (134), and depositing on the outer surface of the resultant soot body a coating of cladding soot (137) having a thermal coefficient of expansion similar to that of said second coating (134) and having a refractive index equal to or lower than that of said second coating (134).

Fig. 4

EP 0 145 030 A2

# METHOD OF FORMING AN
## OPTICAL WAVEGUIDE FIBER.

In many applications of single mode optical waveguides, e.g. gyroscopes, sensors and the like, it is important that the propagating optical signal retain the polarization characteristics of the input light in the presence of external depolarizing perturbations. This requires the waveguide to have an azimuthal asymmetry of the refractive index profile.

A slight improvement in the polarization performance of single mode optical waveguides is achieved by distorting the fiber core symmetry as a means of decoupling the differently polarized waves. Two such optical fiber waveguides are disclosed in US Patent No. 4,184,859 and in the publication by V. Ramaswamy et al. "Influence of Noncircular Core on the Polarisation Performance of Single Mode Fibers", Electronics Letters, Vol. 14, No. 5, pp. 143-144, 1978. However, the Ramaswamy publication reports that measurements on borosilicate fibers with noncircular cores indicate that the noncircular geometry and the associated stress-induced birefringence alone are not sufficient to maintain polarization in single mode fibers.

The invention disclosed in UK Patent Specification GB 2,012,983A is based upon the recognition that orthogonally polarized waves are more efficiently decoupled in a waveguide that is fabricated in such a manner as to deliberately enhance stress-induced, or strain birefringence. That patent specification teaches that such behaviour is accomplished by introducing a geometrical and material asymmetry in the preform from which the optical fiber is drawn. The strain-induced birefringence is introduced by at least partially surrounding the single mode waveguide by an outer jacket having a different thermal coefficient of expansion (TCE) than that of the waveguide and a thickness along one direction that is different from its thickness along a direction orthogonal to the one direction. For example, the preform may be a three-layered structure comprising an inner core region surrounded by a cladding layer which is in turn surrounded by an outer jacket layer having a TCE different from that of the cladding layer. Diametrically opposed portions of the outer layer are ground away, and the resultant preform is drawn into a fiber approximating a slab configuration in which the thicknesses of the outer jacket layer are different in two orthogonal directions. A similar result can be accomplished by constructing the preform from an inner core region, a cladding region and two outer jacket layers oppositely disposed along the longitudinal surface of the preform. Difficulty can be encountered in the manufacture of that type of preform since stress is built up in the outer layer. When grinding the outer layer or when cutting slots therein, the built-up stress has a tendency to cause the preform to break. Assuming that a fiber can be drawn from the preform, the stress-forming outer layer is far removed from the fiber core and therefore, the effect of the stress on the core is minimal.

In one embodiment of GB-A 2,012,983 represented by Figures 10-15, a relatively thick substrate tube forms the outer portion of the optical fiber. In order to impart to the fiber the desired characteristics, either the inner or outer surface of the substrate tube is non-circular. Because at least a portion of the substrate wall must be relatively thick, the efficiency of deposition is adversely affected. Also, since the substrate tube forms the outer, compressive layer of the fiber, commercially available tubes may not be usable in the process unless they fortuitously possess the desired expansion and/or viscosity characteristics of the resultant fiber outer layer.

In a fiber such as that illustrated in Figure 12 of GB-A 2,012,983, the outer layer 60 of cladding is referred to herein as the stress cladding. It has been found that the stress $\sigma$ at the core of a circularly symmetric single mode optical waveguide fiber is equal to the product of fxg where f is a function of geometrical factors and g is a function of glass factors. The function f is given by the equation

$$f = \frac{A_{sc}}{A_f} \tag{1}$$

where $A_{sc}$ is the cross-sectional area of the stress cladding and $A_f$ is the total cross-sectional area of the fiber. The function f can therefore have a value such that $o < f < 1$. The function g is given by the equation

$$g = \frac{E(\Delta\alpha)\,\Delta T}{2(1-\nu)} \tag{2}$$

where E is the effective elastic modulus of the fiber, $\Delta\alpha$ is the difference between the TCE of the stress cladding and the TCE of the remainder of the fiber, $\Delta T$ is the difference between the lowest set point of the glasses of which the fiber is comprised at room temperature and $\nu$ is Poissons ratio. Since the aforementioned definition of stress $\sigma$ generally applies also to non-symmetrical fibers such as those disclosed in GB-A 2,012,983, it is necessary to maximize f to obtain the greatest core stress and thus obtain the greatest stress birefringence. Values of f greater than 0.9 should be achieved to provide maximum values of stress birefringence. The need to maximize function f is recognised in GB-A 2,012,983 as evidenced by equations (7) and (8) thereof.

Another art-recognized design criterion for single mode optical waveguide is concerned with minimizing loss. A common method of forming single mode optical waveguide preforms is illustrated in Figure 11 of GB-A 2,012,983 which shows a plurality of vapor deposited layers on the inner surface of a substrate tube. The purity of the substrate tube is generally not as high as that of the vapor deposited glass. Therefore, the vapor deposited core glass is isolated from the substrate tube by a layer of vapor deposited optical cladding glass of sufficient thickness. For a single mode fiber having a core cross-section which is circular or nearly circular, the radius $r_s$ of the optical cladding should be at least five times the radius $r_a$ of the core. This estimate is based on the findings reported in the publication: Electronics Letters Vol. 13, No. 15, pp. 443-445 (1977). For fibers having cores of oblong cross-section, this relationship lacks meaningful significance. In such a fiber, the extent of the optical cladding is better described in terms of its thickness. Since the size of a single mode core is related to the transmission wavelength $\lambda$, the thickness of the optical cladding can also be specified in terms of $\lambda$. The aforementioned cladding radius to core radius ratio implies that the thickness of the optical cladding be at least about 20 $\lambda$. When a single mode waveguide is designed in accordance with this criterion, loss associated with cladding thickness is limited to an acceptably low value.

The following analysis of GB-A 2,012,983 is made by taking into consideration, inter alia, the specific embodiment described in conjunction with Figures 10-12 thereof. The fiber of that embodiment will satisfy the requirement that the ratio $A_{sc}/A_f$ exceeds 0.9 except when the substrate tube is completely filled with internal layers during the process of making the preform from which the fiber is drawn. This aforementioned exception is, of course, an impossibility. Since the substrate tube cannot be completely filled during the internal layer deposition process, the total thickness of the internal layers is limited by the internal diameter of the substrate tube. It is well known that the core diameter of a step profile single mode fiber is generally between 3 $\mu$m and 10 $\mu$m. The outside diameter of the fiber is typically about 125 $\mu$m. If the preform described in GB-A 2,012,983 is formed in accordance with conventional practice so that the ratio $A_{sc}/A_f$ exceeds 0.9, the thickness of the optical cladding layer will be less than 20$\curvearrowright$ at conventional wavelengths. Thus, the excess fiber loss due to insufficient optical cladding thickness will not be sufficiently low for many applications.

According to the invention there is provided a method of forming an optical waveguide fiber, comprising the steps of depositing on a rotating starting member a first coating of particulate glass, depositing on the outer surface of said first coating another coating of particulate glass, removing said starting member, and forming an optical waveguide fiber from the resultant soot preform, the step of depositing another coating comprising depositing a second coating of particulate glass on the outer surface of said first coating, the refractive index of said second coating being lower than that of said first coating, depositing on diametrically opposed portions of said second coating, first and second longitudinally extending regions of glass soot having a thermal coefficient of expansion different from that of the said second coating, and depositing on the outer surface of the resulting soot body a coating of cladding soot having a thermal coefficient of expansion similar to that of said second coating and having a refractive index equal to or lower than that of said second coating.

The fiber can further comprise a second pair of diametrically opposed regions which are orthogonally disposed with respect to the two diametrically opposed regions. The TCE of the two regions is greater than that of the cladding glass, and the TCE of the second pair of regions is less than that of the cladding glass.

In an embodiment of the invention the fiber is formed by the following method. A first coating of particulate glass is deposited on a rotating mandrel. A second coating of particulate glass having a refractive index lower than that of the first coating is deposited over the first coating. First and second longitudinally extending regions of particulate glass having a TCE different from that of the second coating are deposited on diametrically opposed portions of the second coating. This can be accomplished by halting rotation of the mandrel, moving the deposition means longitudinally along the mandrel, rotating the mandrel 180°, and again moving the deposition means along the mandrel. Alternatively, the longitudinally extending regions can be formed by changing the compositions of reactant materials supplied to the deposition means during the rotation of the mandrel so that the desired particulate glasses are formed and deposited during each increment of mandrel rotation. A coating of particulate cladding glass is then deposited on the outer surface of the resultant body. The TCE of the cladding glass is similar to that of the second glass coating, and the refractive index of the cladding glass is equal to or lower than that of the second glass coating. The mandrel is removed, and the resultant porous preform is formed into an optical waveguide fiber.

In the accompanying drawings:

Figure 1 is a cross-sectional view of an optical

- 7 -

waveguide fiber which can be made in accordance with the method of the present invention.

Figures 2 and 3 are cross-sectional view of further fibers which can be so made.

Figure 4 shows an apparatus for carrying out the present invention.

Figure 5 is a cross-sectional view of a finished soot preform as formed by the apparatus of Figure 4.

Figure 6 is a cross-sectional view of a fiber drawn from the preform of Figure 5.

Figure 7 is a cross-sectional view of a portion of a modified soot preform.

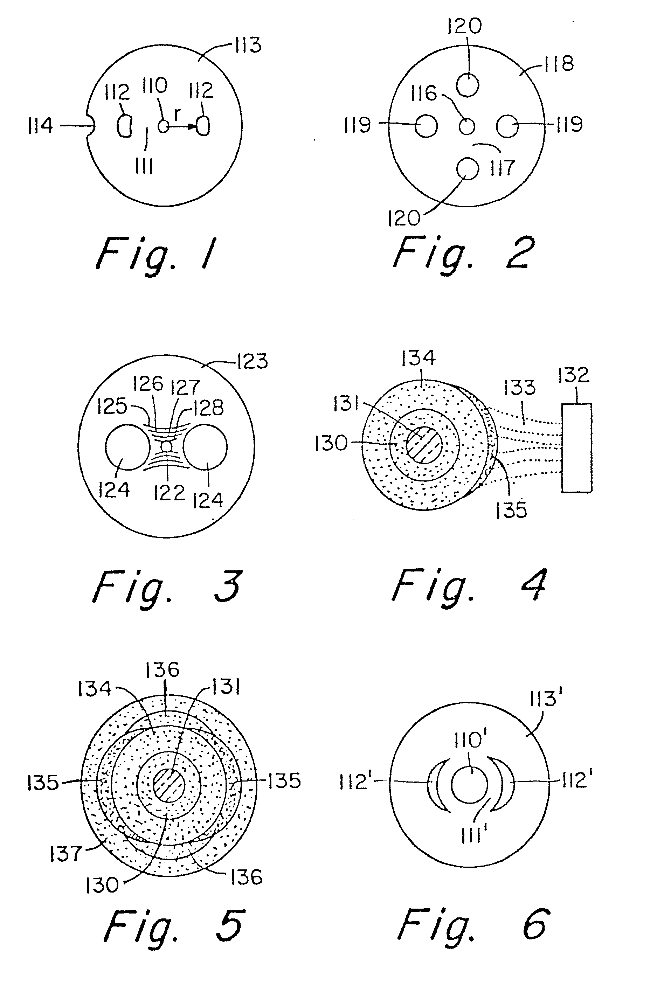

Figures 1 to 3 show fibers which can be produced by the method of the present invention, wherein the fiber core is subjected to a stress-induced birefringence by introducing into the cladding on opposite sides of the core longitudinally extending regions of glass having a TCE different from that of the remainder of the cladding. Figure 1 shows a cross-sectional view of a single polarization optical waveguide fiber comprising a core 110 surrounded by an inner cladding region 111. Diametrically opposed relative to core 110 are too narrow, longitudinally-extending regions 112 formed of a material having a TCE different from that of material 111. While regions 112 are illustrated as being of somewhat random cross-section in Figure 1, the method described below results in the formation of these regions in various specific shapes. When such a fiber is drawn, the longitudinally-extending regions 112 and the cladding regions disposed orthogonally thereto will shrink different amounts whereby regions 112 will be put into a state of tension or compression depending upon the TCE thereof relative to that of the cladding. A strain induced birefringence, which is thus induced in the fiber, reduces coupling between the two orthogonally polarized fundamental modes. ·Surrounding regions 112 is an outer cladding region 113, the refractive index of which is preferably equal to or less than that of inner cladding region 111. Region 113 may consist, for example, of any of the materials specified above for use as cladding region 111.

The outer surface of cladding region 113 may be circular as illustrated in Figure 1, or it may have areas which are flattened in the manner disclosed in the aforementioned U.K. Patent Application GB-A 2,012,983 for the purpose of aligning a fiber with a polarized light source or with another fiber to which it is to be connected. If the outer surface of cladding 113 is substantially circular, means such as longitudinal depression 114 may be provided for alignment purposes. If it is preferred that the outer surface of the fiber be substantially circular, the input end of the fiber can be properly orientated during its installation into a system. The input end is connected to a polarized light source, and an analyzer is connected to the output end of the fiber. The input end of the fiber is rotated relative to the source until a maximum or a minimum is detected in the light emanating from the output end. When either the maximum or minimum light output is detected, the input end of the fiber is then fixedly mounted with respect to the polarized light source.

Regions 112 should be as close as possible to core 110 without inordinately affecting the light transmitting properties of the fiber. If regions 112 are formed of low loss material having the same refractive index as inner cladding region 111, then the minimum radius $r_m$ of regions 112 is about 1.5 $r_a$, where $r_a$ is the radius of core 110. A matching of the refractive index of regions 112 to that of the cladding could be accomplished by employing a cladding formed of $SiO_2$ and forming the stress-inducing regions 112 of, for example, $SiO_2$ doped with one of the following combinations of dopant oxides: $GeO_2$ and $B_2O_3$ or $P_2O_5$ and $B_2O_3$ or $GeO_2$, $P_2O_5$ and $B_2O_3$. An example of a suitable high TCE composition having a refractive index substantially the same as pure $SiO_2$ is $SiO_2$ doped with 12 wt.% $B_2O_3$ and 4 wt.% $P_2O_5$. To ensure that the resultant fiber possesses low loss characteristics, at least the entire central region, i.e. the core and inner cladding region, should be formed by a chemical vapor deposition (CVD) process. If the refractive indices of these two regions are not matched and $r_m$ is too small, i.e. less than about $1.5r_a$, regions 112 can cause light transmission loss due to scattering.

If regions 112 adversely affect the light transmission properties of the fiber, e.g. the regions 112 are formed of a material which inordinately absorbs light at the transmission wavelengths, the inner radius $r_m$ of these regions should be at least three times and preferably a minimum of five times the radius of the core. This estimate is based on the finding reported in the publication: Electronics Letters, Vol. 13, No.15, pp 443-445 (1977). Obviously, the adverse effect of light absorbing material increases as the distance from the material to the core decreases. However, the magnitude of the birefringence at the core also decreases as the inner radius $r_m$ of the stress-inducing longitudinally extending regions decreases. The optimum inner radius of regions 112 depends upon the specific type of single mode waveguide employed, since the amount of light propagating beyond the core region of a single mode waveguide depends upon such parameters as core redius and refractive index.

A fiber may contain a second set of diametrically opposed longitudinally-extending regions having physical characteristics which are different from those of the first set of stress-inducing regions. The fiber illustrated in Figure 2 comprises core 116, inner cladding region 117, and outer cladding region 118. Two longitudinally-extending regions 119, which have a TCE different from that of the cladding regions, are diametrically opposed relative to core 116. Orthogonally disposed with respect to regions 119 is a second pair of longitudinally extending regions 120 which may comprise a light absorbing glass or a glass having a TCE which deviates from that of region 117 in a direction different from the direction in which the TCE of region 119 deviates from that of region 117. For example, the TCE of regions 120 should be less that the TCE of region 117 if the TCE of regions 119 is greater than the TCE of region 117.

If the cladding regions consisted of pure $SiO_2$, regions 119 could comprise $SiO_2$ doped with $B_2O_3$ and $P_2O_5$ while regions 120 could comprise $SiO_2$ doped with $TiO_2$. Regions 119 will be in a state of tension while regions 120 will be in a state of compression. The effect of the two tensive regions is additive with that of the two compressive regions, the resultant combination providing a greater magnitude of stress-induced birefringence than that which would be obtainable with either regions 119 or regions 120 alone.

The $TiO_2$ doped regions are lossy for two reasons. The $TiO_2$-$SiO_2$ glass tends to phase separate and form small inhomogeneous scattering sites which increase scattering loss. Also, the $TiO_2$ raises the refractive index of the region to a value greater than that of region 117 so that light from core 116 that reaches regions 120 will tend to refract into and through regions 120 and thus away from core 116. Stress regions can be made lossy by forming them from glass rods which have been melted in crucibles containing absorption impurities such as iron, nickel, cobalt, copper and the like.

The aforementioned U.K. Patent Application GB-A 2,012,983 states that the methods disclosed therein are capable of fabricating fibres with a strain birefringence $\Delta n$ as large as $40 \times 10^{-5}$ and that the beat length L for such as value of $\Delta n$ is 2.5 mm at 1 $\mu$m wavelength and 1.25 at 0.5 $\mu$m. Some applications, however, require even shorter beat lengths, thereby necessitating values of $\Delta n$ around $10^{-3}$. The following theoretical example indicates that such values of $\Delta n$ are easily achieved by the fiber construction of the present invention. Referring to Figure 3, there is illustrated a fiber having a core 122, cladding 123 and two longitudinal regions 124 of circular cross-section. The diameter of core 122 is 5 $\mu$m, that of stress-producing regions 124 is 25 $\mu$m and that of cladding 123 is 125 $\mu$m. The centers of circular regions 124 are located at a radius of 25 $\mu$m. The specific composition of core 122 is immaterial, it merely being necessary that the refractive index thereof be greater than that of cladding 123 which consists of pure $SiO_2$. The composition of regions 124 is 5 wt.% $P_2O_5$, 12 wt.% $B_2O_3$ and 83 wt.% $SiO_2$. Birefringence calculations were based on the publication: G.W. Scherer, "Stress-Induced Index Profile Distortion in Optical Waveguides", Applied Optics, Vol 19, No. 12, June, 1980, pp. 2000-2006. Using computer techniques, the birefringence in the region of the core and inner cladding due to one of the regions 124 was determined. Then the birefringence in the central region due to the other of regions 124 was determined and added to the first calculated value. The results are plotted in Figure 3. Lines 125, 126, 127 and 128 are lines of equal birefringence of $0.4 \times 10^{-3}$, $0.5 \times 10^{-3}$, $0.6 \times 10^{-3}$ and $0.7 \times 10^{-3}$, respectively, the latter line passing through core 122.

The method according to the invention for forming the fiber employs a flame hydrolysis process similar to that disclosed in US Patents Nos. 3,737,292 and 4,165,223. The resultant fiber is shown in cross-section in Figure 6 wherein elements similar to those in Figure 1 are represented by primed reference numerals. The fiber of Figure 6 differs from that of Figure 1 in that longitudinally extending stress-inducing regions 112' are crescent-shaped.

Referring to Figure 4, a layer 130 of glass soot is initially deposited on a cylindrical glass mandrel 131 from flame 133 emanating from burner 132. After the first soot layer 130 reaches a predetermined thickness, the composition is changed and a second soot layer 134, which is to form the inner cladding layer 111', is deposited. During the deposition of layers 130 and 134, mandrel 131 is rotated and burner 132 is translated longitudinally with respect to the mandrel. In order to form the soot which is to be consolidated to form strips 112', the mandrel rotation stops and burner 132 makes a sufficient number of longitudinal passes to form a soot layer 125. Mandrel 131 is rotated 180° and a second soot layer 135 is deposited opposite the first one as shown in Figure 5. Layers 136 of cladding soot can be deposited on layer 134 between strips 135 in the same manner. A layer 137 of cladding soot is then deposited by resuming mandrel rotation. The soot preform, when completed, is porous in form and must be heated to fuse or "collapse" it into a monolithic glass preform which can be drawn into the optical waveguide which is shown in Figure 6.

The steps of depositing strips 136 of cladding glass may be omitted without affecting to too great an extent the geometry of the resultant fiber. If cladding layer 137 is deposited directly upon that portion of the soot preform comprising layer 134 and strips 135 as the outer surface thereof, the soot stream from the burner will deposit a greater amount of soot when the surface of layer 134 is facing the burner than when the surface of strips 135 is facing the burner since a greater surface area is presented to the soot steam when surface 134 faces the burner. This tends to decrease the non-circularity of the soot blank cross-section as layer 137 is built up. During drawing of the fiber from a consolidated blank surface tension tends to round the outer surface of the fiber, thereby slightly affecting the circularity of the core. This is not, however, a detrimental feature for single mode waveguides of the type to which the present invention relates.

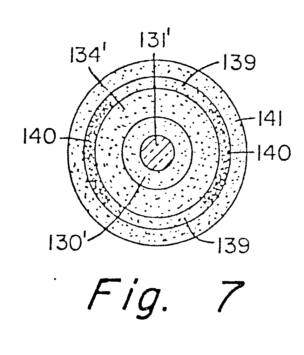

A modified preform produced by the flame hydrolysis process is illustrated in Figure 7 wherein elements similar to those of Figure 4 are represented by primed reference numerals. After layers 130' and 134' have been deposited in the manner described in conjunction with Figure 4, a layer comprising segments 139 and 140 is deposited in the following manner. The soot deposition apparatus should employ a reactant delivery system such as that disclosed in U.S. Patent No. 4,314,837. That patent discloses a reactant delivery system whereby reactant vapors are fed to the flame hydrolysis burner by way of flow controllers, the throughputs of which are controlled by a system control circuit. A shaft position indicator connected to mandrel 131' informs the system control circuit as to which part of the soot preform surface presently faces burner 132. A given reactant flow may be employed in the deposition of regions 139 and an additional dopant reactant which affects the expansion coefficient of the deposited glass may be fed to the burner during the deposition of regions 140. Thus, as mandrel 131' rotates at a constant angular velocity, regions 140 are formed by supplying the burner with "pulses" of dopant reactants. Due to the mixing of reactant vapors, a transition region exists between regions 139 and 140. Outer layer 141 of cladding material can be deposited over the layer comprising regions 139 and 140 as discussed above. After mandrel 131' is removed, the preform of Figure 7 can be drawn into a fiber the cross-sectional configuration of which is similar to that of the fiber shown in Figure 21 of EP-A 0061901.

Instead of depositing a soot-produced outer cladding layer by the flame hydrolysis technique, that layer can be partially or wholly eliminated, and the outer cladding may be provided by a glass tube. For example, after strips 135 and 136 of Figure 15 are formed, or after the layer comprising regions 111' and 112' of Figure 16 have been deposited, the mandrel is removed and the soot blank is consolidated. The resultant dense blank is inserted into a tube, and the resultant combination is drawn into a fiber in accordance with the teachings of US Patent No. 3,932,162.

CLAIMS:

1. A method of forming an optical waveguide fiber, comprising the steps of depositing on a rotating starting member (131) a first coating (130) of particulate glass, depositing on the outer surface of said first coating (130) another coating (134, 135, 136) of particulate glass, removing said starting member (131), and forming an optical waveguide fiber from the resultant soot preform, the step of depositing another coating comprising depositing a second coating (134) of particulate glass on the outer surface of said first coating (130), the refractive index of said second coating (134) being lower than that of said first coating (130), depositing on diametrically opposed portions of said second coating (134) first and second longitudinally extending regions (135) of glass soot having a thermal coefficient of expansion different from that of the said second coating (134), and depositing on the outer surface of the resultant soot body a coating of cladding soot (137) having a thermal coefficient of expansion similar to that of said second coating (134) and having a refractive index equal to or lower than that of said second coating (134).

2. A method in accordance with claim 1, wherein the step of depositing said diametrically opposed longitudinally extending regions (135) of glass soot comprises halting rotation of said starting member (131), moving a flame hydrolysis burner (132) longitudinally with respect to said starting member (131) while depositing a first crescent-shaped longitudinally extending region of glass soot, rotating said mandrel 180° and thereafter again halting starting member rotation, and moving said flame hydrolysis burner (132) longitudinally with respect to said starting member (131) while depositing a second longitudinally extending region of glass soot.

3.    A method in accordance with claim 2, wherein the step of depositing said diametrically opposed regions further comprises the steps of rotating said starting member 90° and halting rotation thereof, depositing a layer of soot (136) on the surface of said second coating (134) which extends between said first and second longitudinally extending regions (135) of soot, rotating said starting member (131) 180° and halting rotation thereof, and moving said burner (132) longitudinally with respect to said starting member (131) while depositing a fourth longitudinally extending region (136) of glass soot, the composition of said third and fourth longitudinally extending soot regions (136) being different from that of said first and second longitudinally extending regions (134, 135) of glass soot.

4.    A method in accordance with claim 1, wherein the step of depositing diametrically opposed longitudinally extending regions (135) of glass soot comprises rotating said starting member (131), providing longitudinal movement between a flame hydrolysis burner (132) and said starting member (131), providing to said burner (132) reactant vapors for forming a base glass soot, and supplying said burner (132) with a pulse of a second reactant vapor each 180° of rotation of said burner (132).

0145030

1/2

Fig. 1

Fig. 2

Fig. 3

Fig. 4

Fig. 5

Fig. 6

Fig. 7